# EUROPÄISCHE PATENTANMELDUNG

(11) **EP 1 845 003 A2**
(43) Veröffentlichungstag der Anmeldung: **17.10.2007**
(21) Anmeldenummer: 07104783.1
(22) Anmeldetag: 23.03.2007
(51) Int. Cl.: B60W 50/08

(54) **Fahrerassistenzsystem mit Anfahrhinweisfunktion**

(30) Priorität: 12.04.2006 DE 102006017177
(71) Anmelder: ROBERT BOSCH GMBH, 70442 Stuttgart (DE)
(72) Erfinder: Mathony, Hans-Joerg, 71732 Tamm-Hohenstange (DE); Kuttenberger, Alfred, 71083 Herrenberg (DE); Kroeninger, Mario, 77815 Buehl (DE); Meister, Dirk, 71696 Moeglingen (DE); Bunse, Michael, 71665 Vaihingen/Enz (DE); Spaeth, Stephan, 71634 Ludwigsburg (DE)

(57) **Zusammenfassung**

Fahrerassistenzsystem für Kraftfahrzeuge, mit einer Umfeldsensorik (10) zur Erfassung des Verkehrsumfelds, einer Fahrzeugsensorik (12) zur Erfassung des Fahrzeugzustands, einer intelligenten Situationsbewertungseinrichtung (20) und einer Ausgabeeinrichtung (22, 24) zur Ausgabe eines Anfahrhinweises an den Fahrer, dadurch gekennzeichnet, daß die Situationsbewertungseinrichtung (20) dazu ausgebildet ist, unabhängig vom Aktivitätszustand eines ggf. vorhandenen Abstandsregelsystems mit Stop & Go Funktion anhand der Daten der Umfeld- und Fahrzeugsensorik (10, 12) einen Wartezustand des Fahrzeugs sowie die Beendigung dieses Wartezustands zu erkennen und dann den Anfahrhinweis auszugeben, wenn der Fahrer nicht innerhalb einer bestimmten Zeitspanne anfährt.

## Beschreibung

### Stand der Technik

Die Erfindung betrifft ein Fahrerassistenzsystem für Kraftfahrzeuge, mit einer Umfeldsensorik zur Erfassung des Verkehrsumfelds, einer Fahrzeugsensorik zur Erfassung des Fahrzeugzustands, einer intelligenten Situationsbewertungseinrichtung und einer Ausgabeeinrichtung zur Ausgabe eines Anfahrhinweises an den Fahrer.

In DE 199 58 520 A1 wird als Beispiel eines solchen Fahrerassistenzsystems ein Abstands- und Geschwindigkeitsregelsystem beschrieben, bei dem mit Hilfe eines Radarsensors der Abstand zu einem vorausfahrenden Fahrzeug gemessen wird und die Geschwindigkeit dann so geregelt wird, daß das vorausfahrende Fahrzeug in einem angemessenen Abstand verfolgt wird. Außerdem weist dieses System eine Stop & Go Funktion auf, die es gestattet, das eigene Fahrzeug in den Stand zu bremsen, wenn das vordere Fahrzeug anhält, beispielsweise bei Auffahren auf ein Stauende. Wenn sich das vordere Fahrzeug wieder in Bewegung setzt, erhält der Fahrer automatisch einen Anfahrhinweis, und er kann dann durch Eingabe einer Anfahrbestätigung einen den automatischen Anfahrvorgang auslösen.

Fahrerassistenzsysteme dieser Art befinden sich jedoch noch in der Einführungsphase, und ihr Einsatzgebiet dürfte auf absehbare Zeit auf Fahrzeuge der oberen Mittelklasse beschränkt bleiben.

DE 101 39 595 A1 beschreibt eine Vorrichtung zum automatischen Einschalten einer Brennkraftmaschine eines Kraftfahrzeugs in Abhängigkeit von der Verkehrssituation und dem Zustand der Kupplung und des Getriebes. Zur Erfassung der Verkehrssituation kann der Abstand zu einem vorderen Fahrzeug gemessen werden oder der Zustand einer Verkehrsregelungsanlage optisch erkannt werden.

### Vorteile der Erfindung

Die Erfindung mit den in Anspruch 1 angegebenen Merkmalen befaßt sich speziell mit dem Problem, daß es vor Lichtzeichenanlagen (Ampeln) bei hohem Verkehrsaufkommen, insbesondere im städtischen Berufsverkehr, häufig zu Stauungen kommt, weil Autofahrer nicht oder erst mit erheblicher Verzögerung bemerken, daß die Ampel auf grün umgeschaltet hat bzw. die vorderen Fahrzeuge in der Ampelschlange sich wieder in Bewegung gesetzt haben. Die Folge ist, daß während einer Grünphase nur verhältnismäßig wenige Fahrzeuge die Kreuzung passieren können, so daß der Stau vor der Ampel beständig anwächst. Hier schafft die Erfindung Abhilfe, indem sie die bereits heute bei vielen Fahrzeugen vorhandene Umfeld- und Fahrzeugsensorik dazu benutzt, solche Situationen zu erkennen, und dem Fahrer frühzeitig einen Anfahrhinweis zu geben.

Beispielsweise sind bereits zahlreiche Fahrzeuge auch der unteren Mittelklasse mit Einparkhilfesystemen auf der Basis von Ultraschallsensoren, Videosensoren oder PMD-Sensoren ausgerüstet (PMD = Photon Mixing Device; ein scannendes Diodenarray mit einer Reichweite von 1 bis 100 m). Diese Sensoren lassen sich mit verhältnismäßig geringem Datenverarbeitungsaufwand dazu nutzen, das Anfahren eines vorderen Fahrzeugs bzw. das Umschalten einer Ampel auf grün zu erkennen. Ergänzend zu der Umfeldsensorik wird durch Auswertung von Signalen der Fahrzeugsensorik sichergestellt, daß der Anfahrhinweis nur in solchen Situationen ausgegeben wird, in denen sich das Fahrzeug und der Fahrer in einem Wartezustand befinden, in dem der Fahrer vor einer roten Ampel, einem Bahnübergang oder dergleichen darauf wartet, die Fahrt fortsetzen zu können. In anderen Situationen, beispielsweise wenn der Fahrer anhält, um einzuparken oder um Beifahrer ein- oder aussteigen zu lassen, unterbleibt dagegen der Anfahrhinweis.

Vorteilhafte Weiterbildungen und Ausgestaltungen der Erfindung ergeben sich aus den Unteransprüchen.

Die Umfeldsensorik kann je nach Ausführungsform ein System von Ultraschallsensoren zur Messung des Abstands und der Relativgeschwindigkeit eines unmittelbar vor dem eigenen Fahrzeug haltenden oder fahrenden Fahrzeugs, ein Videosystem, ein Radarsystem oder auch ein Lidarsystem sowie Kombinationen dieser Sensorsysteme umfassen. Im Fall von Ultraschallsensoren können zweckmäßig dieselben Sensoren benutzt werden, die auch für eine Einparkhilfefunktion benutzt werden. Mit einem Videosystem und einer relativ einfachen Bildverarbeitungssoftware ist es möglich, Lichtzeichenanlagen sowie deren Zustand unmittelbar zu erkennen. Außerdem ermöglicht es ein solches System, alternativ oder ergänzend zu den Ultraschallsensoren Relativbewegungen eines vorderen Fahrzeugs zu erkennen. Radarsensoren sind in Verbindung mit Abstandsregelsystemen (ohne Stop & Go Funktion) bereits relativ weit verbreitet und lassen sich ebenfalls für das erfindungsgemäße Fahrerassistenzsystem nutzen. Entsprechendes gilt für Lidarsysteme, die zudem für die Zwecke der vorliegenden Erfindung nur eine relativ gering Ortungstiefe aufzuweisen brauchen und sich deshalb zu verhältnismäßig geringen Kosten realisieren lassen.

Wartezustände sind im allgemeinen dadurch gekennzeichnet, daß das Fahrzeug mit laufendem Motor steht, was beispielsweise mit Hilfe einer Kombination von Raddrehzahlsensoren und Motordrehzahlsensoren erkannt werden kann, die ohnehin im Fahrzeug vorhanden sind. Bei Fahrzeugen mit Automatikgetriebe steht im Wartezustand zumeist der Getriebewählhebel auf Fahrbetrieb, und das Bremspedal ist betätigt. Gegebenenfalls kann der Getriebewählhebel auch auf neutral stehen, so daß das Bremspedal nicht betätigt zu werden braucht. Bei Fahrzeugen mit Handschaltgetriebe befindet sich das Getriebe in der Regel in der Neutralstellung. Die Fahrzeugsensorik umfaßt deshalb vorzugsweise auch Sensoren zur Erfassung der Gas- und Bremspedalstellung und des Getriebezustands. Da die Handbremse des Fahrzeugs im Wartezustand im allgemeinen nicht angezogen ist, ist auch ein Sensor zur Erfassung des Zustands der Handbremse zweckmäßig. Ein Lenkwinkelsensor gestattet es, Zustände zu erkennen, in denen der Fahrer nicht die Fahrt fortsetzen, sondern beispielsweise einparken will. Ergänzend können die Signale von Sensoren ausgewertet werden, die die Positionen der Fahrzeuginsassen erfassen und beispielsweise erkennen, ob die Insassen auf ihrem Sitz Platz genommen und den Sicherheitsgurt angelegt haben, sowie Sensoren, die feststellen, ob die Türen geöffnet oder geschlossen sind. In einer speziellen Ausführungsform kann auch die Orientierung oder Blickrichtung des Fahrers detektiert werden, so daß sich die Ausgabe des Anfahrhinweises auf Sitationen beschränken läßt, in den der Fahrer den Blick von der Ampel abgewandt hat.

Schließlich ist es auch denkbar, daß der Fahrer selbst durch Betätigung einer Taste signalisiert, daß sich das Fahrzeug im Wartezustand befindet.

Die Ausgabe des Anfahrhinweises erfolgt zweckmäßig durch ein akustisches Signal.

### Zeichnung

Ein Ausführungsbeispiel der Erfindung ist in den Zeichnungen dargestellt und in der nachfolgenden Beschreibung näher erläutert.

### Es zeigen:

- Figur 1: ein Blockdiagramm des erfindungsgemäßen Fahrerassistenzsystems; und
- Figuren 2 und 3: Skizzen zur Illustration der Arbeitsweise des Fahrerassistenzsystems in typischen Verkehrssituationen.

### Beschreibung des Ausführungsbeispiels

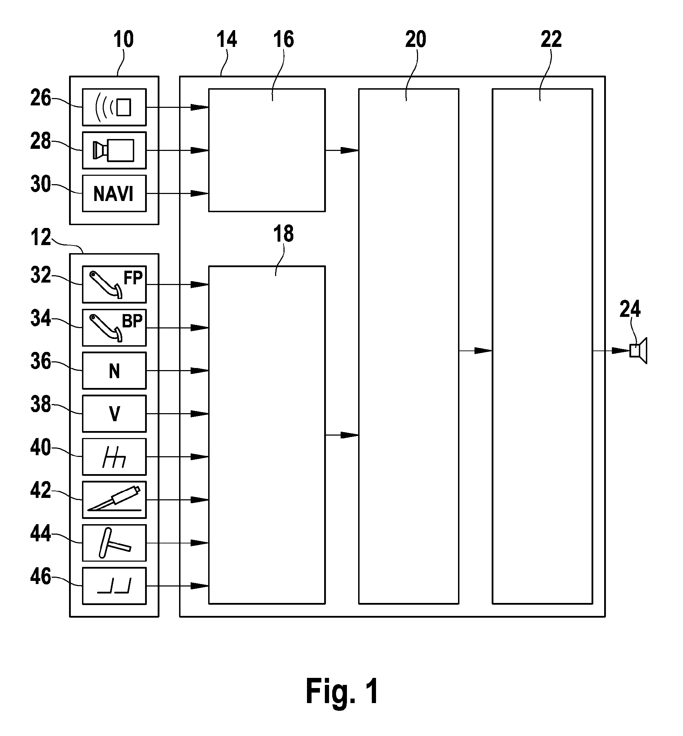

Das in Figur 1 gezeigte Fahrerassistenzsystem umfaßt eine Umfeldsensorik 10, eine Fahrzeugsensorik 12 und ein elektronisches Datenverarbeitungssystem 14, das die Daten der Umfeld- und der Fahrzeugsensorik auswertet. Das Datenverarbeitungssystem 14 gliedert sich in die folgenden vier Funktionsmodule: ein Umfeldmodul 16 zur Auswertung der Daten der Umfeldsensorik und somit zur Erfassung des Verkehrsumfelds, ein Fahrzeugmodul 18 zur Auswertung der Daten der Fahrzeugsensorik und zur Erfassung des Fahrzeugzustands sowie des vermutlichen Fahrerwunsches, ein Situationsbewertungsmodul 20, das die von den Modulen 16 und 18 erfaßten Zustände bewertet, und ein Informationsausgabemodul 22, das anhand des Bewertungsergebnisses des Moduls 20 die Ausgabe eines Anfahrhinweises über einen Lautsprecher 24 bewirkt.

Die Umfeldsensorik 10 wird im gezeigten Beispiel durch eine Kombination von drei Sensorsystemen gebildet, nämlich ein Ultraschallsensorsystem 26, das zugleich Bestandteil eines Einparkhilfesystems sein kann, ein Videosystem 28 und eine Schnittstelle 30 zu einem im Fahrzeug vorhandenen Navigationssystem. Alternativ kann anstelle des Ultraschallsensorsystems 26 auch ein Radar- oder Lidarsystem vorgesehen sein.

Die Fahrzeugsensorik 12 umfaßt im gezeigten Beispiel einen Fahrpedalsensor 32 zur Erfassung der Gaspedalstellung, einen Bremspedalsensor 34 zur Erfassung der Bremspedalstellung, einen Motordrehzahlsensor 36, Raddrehzahlsensoren 38 zur Messung der Fahrgeschwindigkeit V, einen Getriebepositionssensor 40, einen Handbrems-Sensor 42, einen Lenkwinkelsensor 44 und eine Fahrzeuginsassensensorik 46.

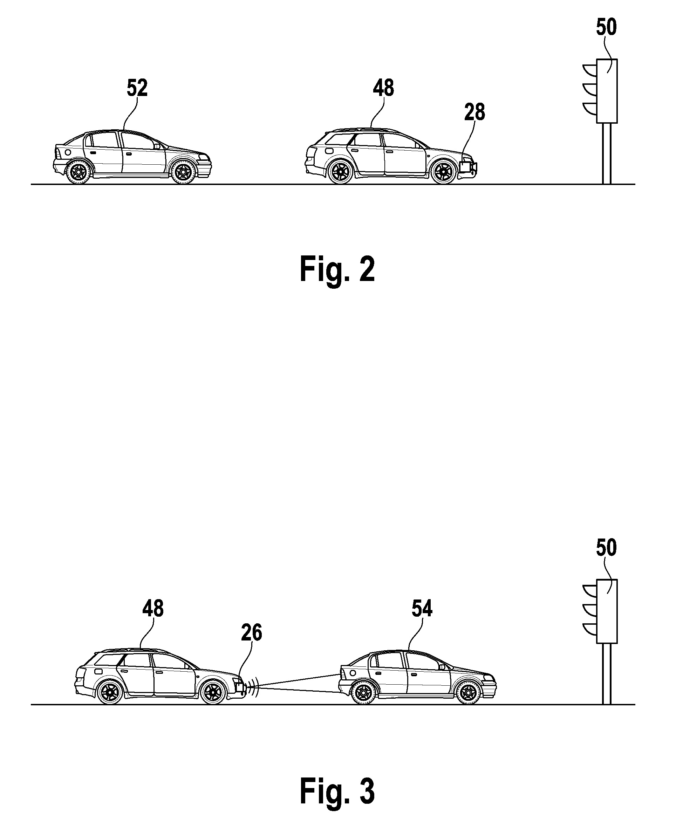

In der in Figur 2 dargestellten Situation hält ein mit dem Fahrerassistenzsystem nach Figur 1 ausgerüstetes Fahrzeug 48 vor einer roten Ampel 50. Das Fahrzeug 48 bildet das erste Fahrzeug einer Ampelschlange, zu der noch weitere Fahrzeuge 52 gehören. Das Navigationssystem meldet über die Schnittstelle 30, daß sich kurz vor dem Fahrzeug 48 eine Kreuzung befindet, so daß mit dem Vorhandensein einer Ampelanlage oder gegebenenfalls mit einer Warteschlange (auch vor einer nicht durch Lichtzeichen geregelten Kreuzung) zu rechnen ist.

Außerdem erkennt das Videosystem 28 das Bild der Ampel 50 sowie deren Zustand "rot". Die Fahrzeugsensorik 12 meldet, daß das Fahrpedal unbetätigt, das Bremspedal hingegen betätigt ist, daß der Motor läuft, das Fahrzeug steht und sich das Getriebe (Automatikgetriebe) in der Neutralstellung befindet. Außerdem meldet die Fahrzeugsensorik, daß die Handbremse nicht angezogen ist und daß das Lenkrad nicht oder allenfalls mäßig eingeschlagen ist. Die Signale der Fahrzeuginsassensensorik 46 zeigen an, daß sich sämtliche Fahrzeuginsassen (soweit vorhanden) auf ihren Sitzen befinden und den Sicherheitsgurt angelegt haben. Daraus ist zu schließen, daß die Insassen nicht die Absicht haben, auszusteigen.

Dieser Zustande wird nun von dem Situationsbewertungsmodulen 20 so bewertet, daß ein Wartezustand vorliegt, d. h., daß der Fahrer des Fahrzeugs 48 darauf wartet, daß die Ampel 50 auf grün umschaltet, um dann sein Fahrt fortzusetzen.

In einer modifizierten Ausführungsform kann zusätzlich ein Gefällesensor vorhanden sein, und wenn dieser Gefällesensor ein starkes Gefälle der Fahrbahn anzeigt, kann der Wartezustand auch dann erkannt werden, wenn die Handbremse angezogen ist.

Wenn nun bei der Ampel 50 das gelbe Licht aufleuchtet, wird dies vom Videosystem 28 erkannt, und das Situationsbewertungsmodul 20 prüft, ob der Fahrer das Bremspedal losläßt und das Fahrpedal betätigt. Wenn dies nicht der Fall ist, so wird beim Umschalten der Ampel auf grün oder kurz danach über das Informationsausgabemodul 22 und den Lautsprecher 24 der Anfahrhinweis ausgegeben.

In der in Figur 3 gezeigten Situation hält das mit dem Fahrerassistenzsystem ausgerüstete Fahrzeug 48 weiter hinten in der Ampelschlange, und vor ihm steht ein weiteres Fahrzeug 54. Das Ultraschallsensorsystem 26 mißt den Abstand und/oder die Relativgeschwindigkeit des Fahrzeugs 54. Solange beide Fahrzeuge stehen, ist die Relativgeschwindigkeit null, und der Abstand entspricht dem üblichen Fahrzeugabstand in einer stehenden Fahrzeugschlange. Im übrigen wird der Wartezustand in dieser Situation auf die gleiche Weise erkannt wie in Figur 2. Wenn nun die Ampel 50 auf grün umschaltet, erkennt das Umfeldmodul 16 anhand der Signale des Ultraschallsensorsystems 26, daß das Fahrzeug 54 anfährt. Falls der Fahrer dann nicht innerhalb einer relativ kurzen Zeitspanne das Fahrpedal betätigt, wird wieder der Anfahrhinweis ausgegeben. Diese Funktion ist unabhängig davon, ob das Videosystem 28 die Ampel 50 erkennt oder ob die Ampel durch das vordere Fahrzeug 54 verdeckt ist.

Die Erkennung des Wartezustands durch das Situationsbewertungsmodul 20 muß nicht zwingend voraussetzen, daß das Navigationssystem das Vorhandensein einer Kreuzung, einer Einmündung oder dergleichen anzeigt. Vielmehr kann es genügen, daß das Videosystem 28 eine Ampel (oder gegebenenfalls auch eine Eisenbahnschranke) erkennt und/oder das Ultraschallsensorsystem 26 ein stehendes vorderes Fahrzeug 54 erkennt. Somit steht die Funktion des Fahrerassistenzsystems beispielsweise auch bei Baustellenampeln zur Verfügung, die nicht in der Routenkarte des Navigationssystems verzeichnet sind. Alternativ ist es bei Baustellenampeln, Bahnübergängen und dergleichen auch denkbar, daß der Fahrer durch eine Tastenbetätigung signalisiert, daß der Wartezustand vorliegt. Ebenso hat der Fahrer die Option, die Assistenzfunktion durch Tastenbetätigung zu deaktivieren.

## Patentansprüche

1. Fahrerassistenzsystem für Kraftfahrzeuge, mit einer Umfeldsensorik (10) zur Erfassung des Verkehrsumfelds, einer Fahrzeugsensorik (12) zur Erfassung des Fahrzeugzustands, einer intelligenten Situationsbewertungseinrichtung (20) und einer Ausgabeeinrichtung (22, 24) zur Ausgabe eines Anfahrhinweises an den Fahrer, **dadurch gekennzeichnet, daß** die Situationsbewertungseinrichtung (20) dazu ausgebildet ist, unabhängig vom Aktivitätszustand eines ggf. vorhandenen Abstandsregelsystems mit Stop & Go Funktion anhand der Daten der Umfeld- und Fahrzeugsensorik (10, 12) einen Wartezustand des Fahrzeugs sowie die Beendigung dieses Wartezustands zu erkennen und dann den Anfahrhinweis auszugeben, wenn der Fahrer nicht innerhalb einer bestimmten Zeitspanne anfährt.

2. Fahrerassistenzsystem nach Anspruch 1, **dadurch gekennzeichnet, daß** die Umfeldsensorik (10) ein Ultraschallsensorsystem (26) aufweist, das vorzugsweise Teil eines Einparkhilfesystems ist.

3. Fahrerassistenzsystem nach Anspruch 1 oder 2, **dadurch gekennzeichnet, daß** die Umfeldsensorik (10) ein Radar- oder Lidarsensorsystem aufweist, das vorzugsweise Teil eines Abstandsregelsystems ist.

4. Fahrerassistenzsystem einem der vorstehenden Ansprüche, **dadurch gekennzeichnet, daß** die Umfeldsensorik (10) ein Videosystem (28) mit zugehöriger Bildverarbeitungseinrichtung umfaßt.

5. Fahrerassistenzsystem nach einem der vorstehenden Ansprüche 1 bis 4, **dadurch gekennzeichnet, daß** die Fahrzeugsensorik (12) einen Mortordrehzahlsensor (36) und mindestens einen Sensor (38) zur Erfassung der Fahrgeschwindigkeit des Fahrzeugs umfaßt und daß eine notwendige Bedingung für die Erkennung des Wartezustands durch die Situationsbewertungseinrichtung (20) darin besteht, daß die Fahrgeschwindigkeit gleich null und die Motordrehzahl von null verschieden ist und die Umfeldsensorik (10) eine "Halt" gebietende Verkehrsregelungsanlage (50) und/oder ein in geringem Abstand vor dem eigenen Fahrzeug (48) stehendes Fahrzeug (54) erkennt.

6. Fahrerassistenzsystem nach einem der vorstehenden Ansprüche, **dadurch gekennzeichnet, daß** die Fahrzeugsensorik (12) mindestens einen Sensor (32, 34, 40, 42, 44) zur Erfassung der Gaspedalbetätigung, der Bremspedalbetätigung, der Getriebeposition, des Zustands der Handbremse und/oder des Lenkeinschlages des Fahrzeugs umfaßt und daß die Situationsbewertungseinrichtung (20) dazu ausgebildet ist, weitere Bedingungen für das Vorliegen des Wartezustands anhand der Signale dieser Sensoren zu prüfen.

7. Fahrerassistenzsystem nach einem der vorstehenden Ansprüche, **dadurch gekennzeichnet, daß** die Fahrzeugsensorik (12) eine Fahrzeuginsassensensorik zur Erkennung der Position und Orientierung der Fahrzeuginsassen, insbesondere des Fahrers, aufweist.
